# FASCICULE DE BREVET EUROPEEN

(11) **EP 1 477 266 B1**
(45) Date de publication et mention de la délivrance du brevet: **04.04.2007**
(21) Numéro de dépôt: 03010716.3
(22) Date de dépôt: 13.05.2003
(51) Int. Cl.: B23K 26/22, B23K 26/03, B23K 26/42

(54) **Procédé et dispositif de soudage par points au laser pour contrôler efficacement la qualité de la soudure obtenue**
Laser Punktschweissverfahren und -vorrichtung zum wirksamen Prüfen der Schweissqualität
Laser spot welding method and device to effectively control the quality of the weld

(43) Date de publication de la demande: 17.11.2004
(73) Titulaire: LASAG AG, 3602 Thun (CH)
(72) Inventeur: Amorosi, Simone, 1024 Ecublens (CH); Gianotti, Ronald, 1112 Echichen (CH); Schwob, Hans Peter, 3661 Uetendorf (CH); Sidler, Thomas, 1304 Cossonay (CH); Wissing, Christian, 3013 Bern (CH)
(74) Mandataire: Ravenel, Thierry Gérard Louis

(56) Documents cités:
- EP-A- 0 331 891
- DE-A- 3 710 816
- US-A- 4 825 035
- US-A- 5 681 490
- PATENT ABSTRACTS OF JAPAN vol. 011, no. 360 (M-645), 25 novembre 1987 (1987-11-25) & JP 62 137187 A (NEC CORP), 20 juin 1987 (1987-06-20)

## Description

La présente invention concerne le domaine des procédés et des dispositifs de soudage par points réalisés à l'aide d'un faisceau laser. Plus précisément, la présente invention concerne un dispositif et un procédé de soudage par points de ce type comportant au moins une première étape de préparation d'un matériau a souder suivie d'une seconde étape de soudage. La première étape est prévue pour modifier l'état de surface au moins dans une région de soudure du matériau à souder, dans le but d'obtenir des conditions prédéfinies aptes à la mise en oeuvre de la seconde étape au terme de laquelle un point de soudure est réalisé.

Cette première étape est déterminante dans le résultat final de la soudure car la surface du matériau subit des transformations physiques parfois brutales au cours du soudage et qui peuvent avoir des conséquences imprévisibles sur la qualité de la soudure obtenue.

De tels procédés sont couramment mis en oeuvre de nos jours en utilisant des méthodes variées en ce qui concerne la préparation de la surface de la région de soudure avant de procéder à l'étape de soudage en tant que telle.

Le brevet US 5,681,490, représentant l'état de la technique le plus proche, décrit un procédé de suivi de la qualité d'une soudure effectuée par faisceau laser. Dans ce but, ce document prévoit de mesurer et analyser les valeurs de différents paramètres physiques évoluant avec l'avancement du soudage, à savoir l'énergie réfléchie par la surface du matériau à souder, l'énergie transmise à travers le matériau et éventuellement les paramètres du faisceau laser employé.

Toutefois, le procédé décrit dans ce brevet présente des limitations techniques importantes. En effet, les résultats obtenus par les analyses effectuées sont utilisés pour constituer une banque de données de "signatures" des soudures réalisées incluant en outre les paramètres de soudage associés, les signatures fournissant une indication du niveau de qualité des soudures correspondantes. Le dispositif prévu pour mettre en oeuvre ce procédé consulte la banque de données, lors d'un soudage ultérieur, pour reprendre des paramètres de soudage ayant conduit à des soudures de bonne qualité et tenter de reproduire le niveau qualitatif correspondant.

Un inconvénient important de ce procédé provient du fait que l'état de surface initial d'un matériau à souder est variable et non prévisible. Ainsi, des paramètres de soudage ayant conduit à l'obtention d'une soudure de bonne qualité pour un premier échantillon d'un matériau donné ne conduiront pas nécessairement à une soudure de bonne qualité pour un second échantillon de ce même matériau.

C'est pourquoi le brevet US 5,681,490 prévoit en outre la possibilité de détecter la qualité d'une soudure qui vient d'être réalisée pour la rectifier lorsqu'elle se révèle être de mauvaise qualité. Une rectification de la soudure elle-même n'étant pas toujours possible, comme en particulier dans le cas d'un chauffage excessif ayant conduit à la formation d'un trou traversant le matériau, il est prévu de réaliser une nouvelle soudure à proximité de la première soudure ratée.

Une telle solution n'est pas toujours acceptable selon l'aspect visuel recherché pour la soudure, en particulier lorsque cette dernière est située sur une partie apparente du produit fini correspondant.

Un but de la présente invention est de pallier aux inconvénients de l'art antérieur susmentionnés en proposant un procédé de soudage permettant d'avoir un meilleur contrôle de la qualité des soudures obtenues par rapport à l'état de l'art.

Dans ce but, la présente invention concerne un procédé de soudage par points conformément à la revendication 1.

De manière préférée, l'opération b) de la revendication 1 est précédée d'une phase d'étalonnage au cours de laquelle une valeur initiale du paramètre physique est déterminée, l'opération b) comprenant en outre une étape de traitement de chaque valeur du paramètre physique mesurée notamment en relation avec cette valeur initiale. L'étape de traitement est destinée à définir une grandeur dont l'évolution au cours de la première étape est liée à l'évolution de la valeur du paramètre physique. Ainsi, l'ajustement des caractéristiques du faisceau laser dans l'opération c) est effectué en fonction de l'évolution de ladite grandeur.

Grâce à ces caractéristiques, le procédé de soudage selon la présente invention permet un suivi efficace de l'avancement du soudage pour adapter les paramètres du faisceau laser au comportement de chaque région de soudure. On peut obtenir, de cette façon, une bonne reproductibilité de la qualité des soudures réalisées.

Ce procédé permet, en particulier, de maîtriser les dimensions des points de soudures obtenues.

Selon un mode de réalisation préféré du procédé selon la présente invention, il est prévu de mesurer le niveau d'énergie réfléchi par le matériau à souder et ajuster en conséquence la puissance du faisceau laser émis, en temps réel.

Il est en outre prévu de mesurer la puissance du faisceau laser utilisé pour irradier le matériau à souder de manière à en ajuster plus finement la valeur et améliorer ainsi le niveau de contrôle du soudage.

Le procédé selon la présente invention est particulièrement bien adapté au soudage de pièces métalliques, comme par exemple en cuivre, métal qui nécessite des conditions de soudage délicates.

La présente invention concerne également un dispositif permettant de mettre en oeuvre le procédé précédemment décrit comme défini dans la revendication 13.

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 représente schématiquement deux éléments destinés à être soudés;
- la figure 2 est un diagramme schématique exposant la stratégie mise en oeuvre dans la première étape du procédé de soudage selon la présente invention;
- la figure 3 représente de manière schématique un exemple de réalisation d'un dispositif destiné à mettre en oeuvre le procédé selon la présente invention;
- la figure 4 est un diagramme représentant un exemple du niveau de puissance du faisceau laser émis sur un matériau à souder durant la première étape du procédé de soudage selon la présente invention, et
- la figure 5 est un diagramme représentant le niveau d'énergie réfléchie par la surface du matériau à souder, durant la première étape du procédé de soudage, correspondant au faisceau laser émis de la figure 4.

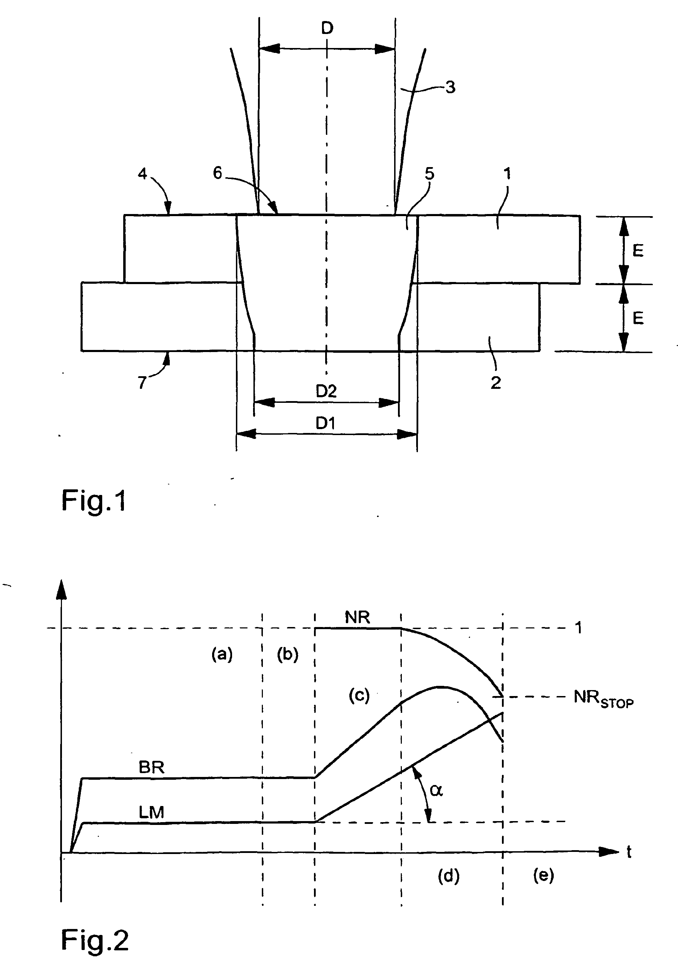

La figure 1 présente un agencement conventionnel de deux éléments destinés à être soudés l'un à l'autre. Ces deux éléments peuvent être par exemple deux plaques ou feuilles métalliques. Une première plaque 1 est disposée au-dessus d'une seconde plaque 2, un faisceau laser 3 étant dirigé sur la face supérieure 4 de la première plaque avec une incidence normale pour réaliser une soudure.

Typiquement, à titre d'exemple non limitatif, les plaques 1 et 2 peuvent être en cuivre et présenter quelques dizaines de µm d'épaisseur E, tandis que le faisceau laser présente un diamètre D de l'ordre de 200 µm.

Pendant le soudage des plaques 1 et 2, on constate la formation d'une zone 5 de métal fondu sur la première plaque 1, dans la région d'impact 6 du faisceau laser 3. Tandis que le faisceau laser est maintenu, la chaleur fournie à la première plaque 1 est transmise à la seconde plaque 2 et la zone 5 de métal fondu s'étend dans la direction de l'épaisseur des plaques 1 et 2 jusqu'à atteindre la surface inférieure 7 de la seconde plaque 2, tel que représenté sur la figure 1.

Généralement, la puissance du faisceau laser 3 est alors abaissée progressivement pour permettre à la zone 5 de métal fondu de se solidifier pour former la soudure, sans faire apparaître de tensions dans cette dernière.

On peut noter que plus la puissance du faisceau laser 3 est élevée pendant la formation de la zone 5 de métal fondu, plus la chaleur transmise aux plaques 1 et 2 est importante. Ainsi, une puissance de faisceau laser plus élevée pendant cette étape du soudage va entraîner la formation d'une zone de métal fondu de plus grandes dimensions transversales, au moins dans la première plaque 1.

La Demanderesse a constaté, après de nombreuses expérimentations que les dimensions transversales D2 de la soudure au niveau de la surface inférieure 7 de la seconde plaque 2 sont directement liées à ses dimensions transversales D1 au niveau de la surface supérieure 4 de la première plaque 1. Par conséquent, les dimensions transversales D1 de la soudure à la surface de la première plaque constituent un critère majeur, à prendre en compte pour la qualité de la soudure qui dépend elle-même des dimensions D2 de cette dernière au niveau de la surface inférieure de la seconde plaque. C'est pourquoi la Demanderesse s'est attachée à la mise au point du procédé de soudage selon la présente invention qui permet d'exercer un contrôle fiable des dimensions D1 de la soudure à la surface 4 de la première plaque 1 lorsque la soudure est en cours de formation.

La Demanderesse a en particulier constaté que la première étape du procédé de soudage joue un rôle prédominant dans la régulation des dimensions D1 finales de la soudure à la surface de la première plaque.

Ainsi, la stratégie présentée sur la figure 2 a été mise au point pour la mise en oeuvre du procédé de soudage selon la présente invention, plus particulièrement en ce qui concerne la première étape du soudage, autrement dit l'étape de préparation du matériau à souder.

La figure 2 présente un exemple de profil préféré pour la puissance du faisceau laser 3 (courbe portant la référence LM) en fonction du temps durant la première étape de soudage, ainsi que le profil correspondant du faisceau réfléchi par le matériau à souder (courbe portant la référence BR).

De manière préférée, la première étape du procédé de soudage selon la présente invention comporte quatre phases, référencées (a) à (d) sur la figure 2, suivies de la seconde étape référencée (e) qui correspond au soudage effectif.

Les phases (a) et (b) constituent des phases préliminaires de préparation de la surface du matériau à souder pendant lesquelles le matériau à souder est chauffé par le faisceau laser avec une puissance inférieure à la puissance minimale permettant de provoquer la fusion dudit matériau. A titre d'exemple, lorsque le matériau à souder est du cuivre on limitera la puissance du faisceau laser à 0,5 kW durant les phases (a) et (b).

Un tel chauffage préliminaire permet, dans un premier temps, de nettoyer la surface du matériau à souder en supprimant des dépôts d'impuretés ou d'oxydes, ce qui correspond à la phase (a).

La phase (b), qui présente une durée de l'ordre de la milliseconde, constitue une phase d'étalonnage qui permet en outre de mesurer la réflectivité de la surface du matériau à souder "à froid", c'est-à-dire à une température notablement inférieure à sa température de fusion. On calcule la valeur moyenne R0 du rapport BR(t)/LM(t) durant la phase (b) qui permet, dans la suite de la première étape du procédé de soudage, de définir une grandeur correspondant à un rapport normalisé noté NR(t) et qui est égal à R(t)/R0, soit [BR(t)/LM(t)]*1/R0.

La valeur obtenue pour R0 permet de définir une valeur de pente, repérée par l'angle a sur la figure 2, pour la courbe LM(t) représentant la puissance du faisceau laser émis en fonction du temps. Ainsi, un matériau présentant une faible réflectivité, soit une capacité élevée à absorber l'énergie du faisceau laser incident, entraînera une augmentation de la puissance du faisceau laser émis moins rapide, i.e. une valeur de a plus faible, qu'un matériau présentant une réflectivité élevée.

De cette manière, la première étape du procédé de soudage selon la présente invention est adaptée aux propriétés physiques "réelles" du matériau à souder et non par rapport à des bases de données de propriétés physiques de matériaux.

En outre, on peut noter que cette stratégie permet de maintenir une valeur sensiblement constante de la durée nécessaire au chauffage du matériau à souder, quelles que soient les propriétés physiques de sa surface, et ainsi de ne pas ralentir notablement le procédé dans le cas d'un matériau à réflectivité élevée.

Une fois que la valeur de R0 a été déterminée, la puissance du faisceau laser est augmentée de manière sensiblement linéaire tout au long de la phase notée (c) de la figure 2, la vitesse d'augmentation de la puissance étant fonction de la valeur de R0, tel que mentionné plus haut.

Durant la phase (c), le matériau à souder est chauffé, dans la région destinée à constituer la soudure à la fin du procédé de soudage, sans subir de modifications physiques notables du point de vue de sa réflectivité.

Par conséquent, durant la phase (c), le rapport normalisé NR(t) ne subit pas de variation importante et sa valeur reste proche de 1, tel que représenté sur la figure 2.

Au bout d'un certain temps, de l'ordre de quelques millisecondes, le matériau commence à fondre dans la région d'impact du faisceau laser, ce qui se traduit au niveau de la courbe représentée sur la figure 2, par une baisse de la valeur de BR(t) dans la phase (d) dans la mesure où le matériau absorbe plus d'énergie pour effectuer son changement de phase.

La diminution de la valeur de BR(t) entraîne une diminution de la valeur de NR(t), tel que visible sur la figure 2.

La puissance du faisceau laser étant généralement plus grande en son centre que vers ses extrémités, le matériau commence à fondre au centre de la région d'impact du faisceau laser, ce qui correspond au changement de comportement de la courbe BR(t).

A ce stade, on continue de faire augmenter la puissance du faisceau laser pour étendre la zone de matériau en fusion dans le plan de la surface du matériau à souder. Dans le même temps, la réflectivité continue de décroître puisque la surface de matériau en fusion augmente, celle-ci étant responsable d'une plus grande absorption d'énergie.

La phase (d) se termine lorsque le rapport normalisé atteint une valeur prédéterminée, notée NR_{STOP} sur la figure 2, le faisceau laser étant arrêté dans le cas représenté sur la figure 2. En pratique, le faisceau laser n'est pas complètement arrêté, lorsque NR(t) atteint sa valeur de coupure NR_{STOP}. mais sa puissance est abaissée comme on le verra plus loin.

Le procédé de soudage selon la présente invention permet d'obtenir une bonne reproductibilité de qualité de soudure dans une large gamme de valeurs de NR_{STOP}. En outre, les dimensions transversales de la soudure obtenue en fin de procédé sont étroitement liées à la valeur retenue pour NR_{STOP}.

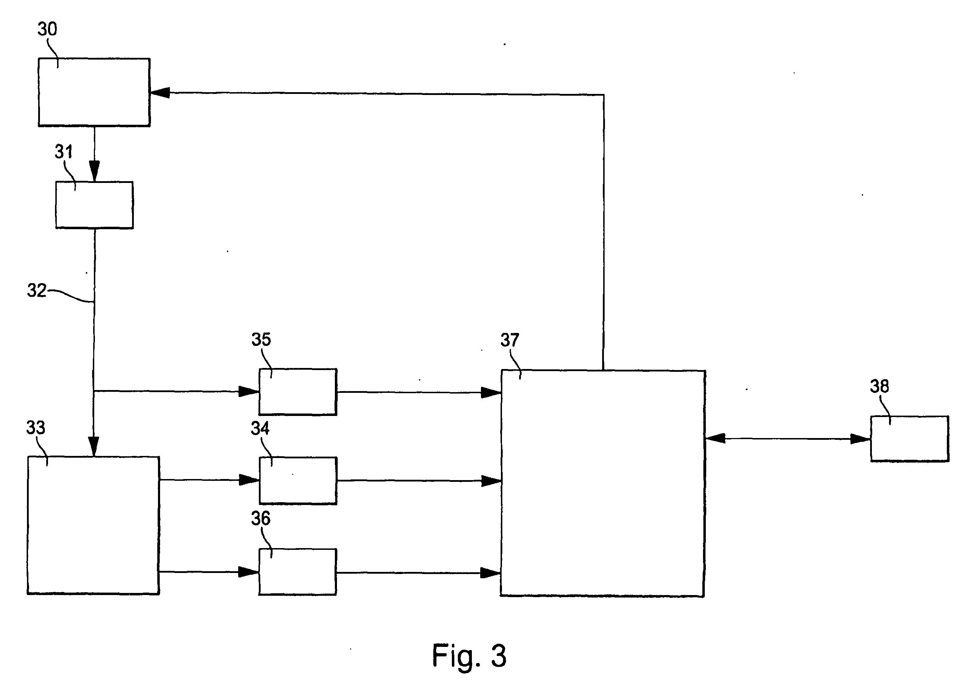

La figure 3 présente un exemple de réalisation préféré d'un dispositif de soudage permettant la mise en oeuvre du procédé qui vient d'être décrit.

Le dispositif comporte un circuit de commande 30 d'une source laser 31 émettant un faisceau laser 32 sur une région 33 d'un matériau à souder.

Un capteur photoélectrique 34 est disposé de manière à pouvoir récolter l'énergie réfléchie par la surface du matériau, précédemment notée BR(t). Ce capteur peut être de tout type approprié, tel qu'une photodiode ou un phototransistor par exemple et, est préférablement disposé sensiblement à la verticale de la région d'impact du faisceau laser sur le matériau à souder. De manière préférée mais non limitative, le capteur photoélectrique 34 est agencé directement dans la tête d'émission du faisceau laser (non représentée).

De manière avantageuse, le dispositif de soudage selon la présente invention comporte également un capteur photoélectrique 35 supplémentaire permettant de mesurer le niveau de puissance du faisceau laser entre la sortie de la source et l'impact sur le matériau à souder.

Selon une variante de réalisation du dispositif de soudage selon la présente invention, on peut en outre prévoir au moins un capteur thermique ou à infrarouge 36, de type conventionnel, permettant d'effectuer une détermination de la température de la région d'impact du faisceau laser à la surface du matériau à souder, à chaque instant.

Chacun des capteurs 34 à 36 produit un signal électrique représentatif de la grandeur qu'il mesure, l'ensemble de ces signaux respectifs étant envoyés à un processeur 37, programmé pour traiter l'ensemble de ces informations. A partir du résultat obtenus par le traitement de ces informations, le processeur 37 envoie un signal de commande adapté au circuit de commande de la source laser 30 pour ajuster les caractéristiques du faisceau laser émis. En particulier, le signal de commande du processeur 37 permet d'ajuster la puissance du faisceau laser émis précédemment notée LM(t), mais on peut également envisager d'en ajuster la fréquence de pulse ou encore la localisation du plan focal du faisceau, par exemple.

Par ailleurs, on prévoit avantageusement de commander le processeur 37 à l'aide d'un ordinateur 38, du type PC, muni d'un programme adéquat qui ne sera pas décrit plus en détail dans la mesure où l'homme du métier ne rencontrera pas de difficulté particulière pour le mettre en oeuvre. Ainsi, l'ordinateur permet à l'utilisateur du dispositif de soudage selon la présente invention de disposer, de manière connue, d'une interface conviviale pour contrôler le déroulement du procédé de soudage.

On peut noter que le choix du type de source laser importe peu pour la mise en oeuvre du procédé de soudage selon la présente invention. Toute source laser présentant une puissance et une longueur d'onde appropriées peut être utilisée, les sources laser à pompage optique conventionnelles, du type Nd:YAG, étant pour l'instant préférées à d'autres sources laser, tel que les Nd:YAG pompés par diode laser ou les piles de diodes laser, pour des raisons de coûts.

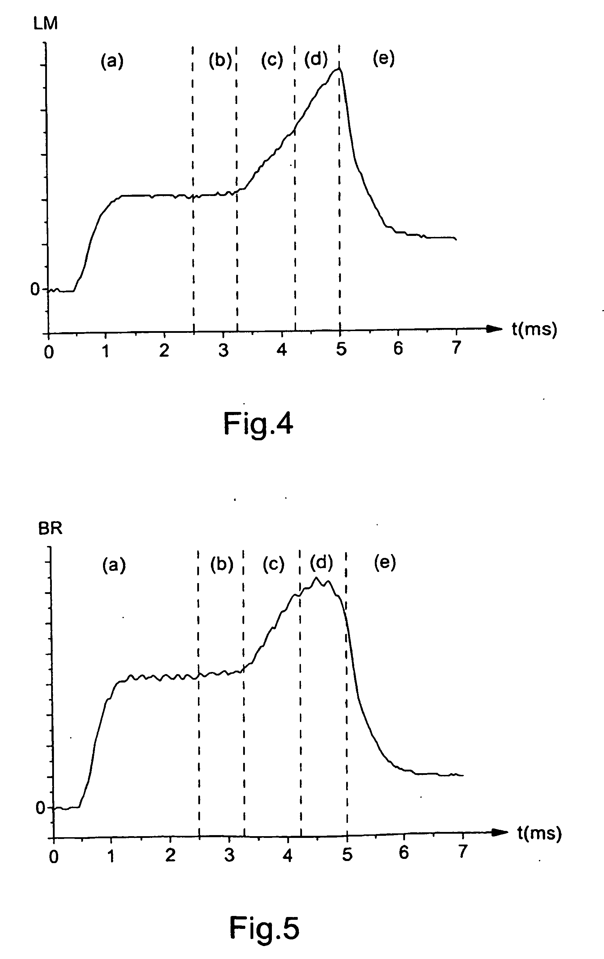

Les figures 4 et 5 représentent des courbes expérimentales respectivement de la puissance du faisceau laser LM(t) et de l'onde réfléchie BR(t) par la surface du matériau à souder. Les phases (a) à (e) du procédé de soudage telles que décrites en relation avec la figure 2 ont été représentées sur la figure 4, leur durée totale étant de l'ordre de 6 millisecondes.

On retrouve, sur la figure 4, l'allure de la figure 2 de la courbe de puissance du faisceau laser émis par la source laser 31, avec la phase (a) de préparation de la surface du matériau à souder, la phase (b) de mesure de la réflectivité "à froid" du matériau et les phases (c) et (d) de chauffage du matériau à souder. On remarque, en combinaison avec la figure 5, que la phase (d) s'étend entre environ 4,2 et 5 ms et correspond au moment où la croissance de la courbe de réflectivité BR(t) diminue jusqu'à conduire à une décroissance, phénomène lié au début puis à l'extension de la fusion du matériau à souder.

On constate en outre, sur les figures 4 et 5, que lors de la seconde étape du procédé de soudage, correspondant à la phase (e) des figures 2 et 4, le faisceau laser n'est pas complètement interrompu comme cela était représenté sur la figure 2.

En effet, la phase (e) correspond en pratique à l'étape de soudage en tant que telle et le matériau nécessite encore d'être chauffé durant cette étape pour que la zone de matériau en fusion se propage dans l'épaisseur à partir de la surface (référencée 4 sur la figure 1) comprenant la région d'impact du faisceau laser, jusqu'à la surface opposée (référencée 7 sur la figure 1) dans le but de finaliser la soudure.

Toutefois, la transition entre les phases (d) et (e) s'effectue avec une baisse rapide de la puissance du faisceau laser, d'au moins 10 % de sa valeur, notamment pour permettre la dissipation d'un plasma, formé durant les phases précédentes, qui masque la région d'impact du faisceau laser sur la surface du matériau à souder et provoque l'éjection du métal liquide vers l'extérieur de la région de soudure.

Un mode de mise en oeuvre préféré pour la seconde étape consiste à effectuer un suivi de la température de la surface du matériau à souder, à l'aide du capteur à infrarouge 36 pour maintenir celle-ci sensiblement constante. La Demanderesse a en effet constaté qu'une telle stratégie permettait d'atteindre une bonne qualité de la soudure obtenue, en particulier une bonne corrélation entre les dimensions respectives au niveau de la surface supérieure et de la surface inférieure de la soudure.

Dans une dernière étape (non représentée), la puissance du faisceau laser est progressivement ramenée à zéro pour permettre un refroidissement suffisamment lent du matériau pour ne pas faire apparaître de tensions dans le matériau re-solidifié.

Comme cela a déjà été mentionné plus haut, le procédé de soudage selon la présente invention permet de garantir un contrôle efficace et fiable des dimensions et de la qualité des soudure obtenues.

A titre illustratif, le tableau suivant résume les résultats de nombreuses expérimentations conduites par la Demanderesse permettant de confirmer l'efficacité de ce procédé de soudage.

Ce tableau présente les dimensions obtenues pour une soudure dans les conditions exposées plus haut, pour une valeur de rapport normalisé de coupure du faisceau laser NR_{STOP} variant entre 40 et 90 %, lorsque le diamètre du faisceau laser au niveau de la surface du matériau est ajusté à 200 µm. La source laser employée était du type Nd:YAG et, les soudures ont été simulées sur une seule feuille de cuivre présentant une épaisseur de 100 µm et dont la surface était légèrement oxydée.

Les différentes colonnes du tableau comprennent les valeurs respectivement du rapport normalisé de coupure du faisceau laser NR_{STOP}, de la valeur moyenne *µ* du diamètre de la soudure obtenue mesuré au niveau de la surface 4 (figure 1), de l'écart type *σ* pour chaque valeur de NR_{STOP}, de l'écart type relatif σ/µ pour chaque valeur de NR_{STOP}, de la valeur minimale mesurée pour le diamètre Dmin, de la valeur maximale mesurée pour la diamètre Dmax, de l'étendue ΔD calculée pour chaque valeur de NR_{STOP}, et du nombre de mesures N# effectuées pour chaque valeur de NR_{STOP}.

| NR_{STOP} | µ (µm) | σ (µm) | σ/µ | Dmin (µm) | Dmax (µm) | ΔD (µm) | N# |
|---|---|---|---|---|---|---|---|
| 90% | 105.3 | 19.3 | 18.3% | 45 | 158 | 113 | 50 |
| 80% | 152.9 | 7.4 | 4.8% | 136 | 167 | 31 | 50 |
| 70% | 175.4 | 5.5 | 3.1% | 162 | 187 | 25 | 50 |
| 60% | 201.8 | 9.4 | 4.7% | 184 | 225 | 41 | 50 |
| 50% | 242.8 | 8.1 | 3.4% | 229 | 268 | 39 | 50 |
| 40% | 273.3 | 9.5 | 3.5% | 255 | 295 | 40 | 50 |
| Sans contrôle | 247.4 | 35.8 | 14.5% | 149 | 329 | 180 | 50 |

Il convient de noter que plus les valeurs de NR_{STOP} sont faibles, plus le chauffage du matériau à souder a été prolongé à partir de la formation de la zone de matériau en fusion, tel que compréhensible à partir de la figure 2.

La dernière ligne du tableau correspond à une série de mesures effectuées sans prendre en compte l'évolution du signal BR(t), c'est-à-dire en appliquant un pulse laser identique pour toutes les mesures de la série. Les valeurs élevées correspondantes de l'écart type et de l'étendue pour cette série de mesures révèlent l'importance de l'état de surface initial du matériau à souder en matière de contrôle du résultat de la soudure. Cette série de mesures, mettant en oeuvre un procédé de soudage de l'art antérieur, prouve en effet qu'il est difficile d'avoir une bonne reproductibilité des dimensions de la soudure lorsque l'état de surface initial du matériau à souder n'est pas pris en compte dans la première étape de préparation.

De même, on constate que pour la valeur de coupure du rapport normalisé fixée à 90 %, on obtient une mauvaise reproductibilité des résultats. La diversité des valeurs obtenues pour les dimensions des soudures dans cette première série de mesures démontre également l'importance que revêt la prise en compte de l'état de surface initial du matériau à souder. Dans ce cas, la phase de chauffage avec augmentation de la puissance du faisceau laser est trop courte pour effacer la diversité des états de surface respectifs des différentes régions où sont effectuées les soudures.

Les mauvais résultats obtenus lors de cette série de mesures sont toutefois à relativiser, dans la mesure où la valeur calculée pour le diamètre moyen de la soudure (105,3 µm) est un peu faible pour donner lieu à une soudure couramment utilisée dans la pratique.

En ce qui concerne les valeurs de NR_{STOP} inférieures à 90 %, on constate par contre que les résultats des séries de mesures respectives présentent une reproductibilité nettement améliorée par rapport au procédé de soudage selon l'art antérieur.

Toutes les valeurs d'écart type relatif calculées sont en effet inférieures à 5 %, résultat à comparer aux 14,5 % du procédé selon l'art antérieur et qui confirme l'efficacité du procédé de soudage selon la présente invention.

La description qui précède correspond à des modes de réalisation préférés de l'invention et ne saurait en aucun cas être considérée comme limitative.

L'homme du métier pourra sélectionner un type de source laser particulier, la nature des matériaux à souder ou encore la nature et un nombre de capteurs employés différents, sans sortir du cadre de la présente invention telle que définie dans les revendications jointes.

En particulier, le procédé de soudage selon la présente invention est avantageux pour souder des éléments qui sont, outre le cuivre, en aluminium, en or, en argent, en cuprobéryllium (CuBe), en laiton ou encore en bronze.

De nombreuses applications sont envisageables pour le procédé de soudage selon la présente invention, telles que le soudage de pistes de circuits imprimés, de rubans métalliques fins ou encore de fils.

## Revendications

1. Procédé de soudage par points avec un faisceau laser (3, 32) dans lequel le soudage d'au moins un point comporte au moins une première étape de préparation d'un matériau à souder suivie d'une seconde étape de soudage au cours de laquelle ledit faisceau laser est maintenu opérationnel au moins partiellement en vue de finaliser le point de soudure, ladite première étape étant prévue pour modifier l'état de surface (4) au moins dans une région de soudure (33) dudit matériau à souder pour obtenir des conditions prédéfinies aptes à la mise en oeuvre de ladite seconde étape, ladite première étape comprenant les opérations consistant à :
a) diriger un faisceau laser (3, 32) sur ladite région de soudure (33) du matériau à souder,
b) effectuer des mesures de la valeur d'au moins un paramètre physique (BR) caractéristique de l'état de surface (4) du matériau à souder dans ladite région de soudure (33) pour en suivre l'évolution,
c) ajuster les caractéristiques (LM) du faisceau laser (3, 32) en fonction de l'évolution de la valeur dudit paramètre physique (BR) déterminée au cours de l'opération b),
pour obtenir lesdites conditions prédéfinies avant de mettre en oeuvre ladite seconde étape.

2. Procédé de soudage selon la revendication 1, **caractérisé en ce que** dans ladite première étape, l'opération b) est précédée d'une phase (b) d'étalonnage au cours de laquelle une valeur initiale dudit paramètre physique (BR) est déterminée, l'opération b) comprenant en outre une étape de traitement de chaque valeur dudit paramètre physique mesurée notamment en relation avec ladite valeur initiale, pour définir une grandeur (NR) dont l'évolution au cours de ladite première étape est liée à l'évolution de la valeur dudit paramètre physique (BR), l'ajustement des caractéristiques (LM) du faisceau laser (3, 32) dans l'opération c) étant effectué en fonction de l'évolution de ladite grandeur (NR).

3. Procédé de soudage selon la revendication 2, **caractérisé en ce que** lesdites conditions prédéfinies comprennent les dimensions (D1), à la surface (4) dudit matériau à souder dans la région de soudure (33), d'une zone (5) dudit matériau amenée dans un état de fusion à la fin de ladite première étape, lesdites dimensions (D1) étant fonction de la valeur de ladite grandeur calculée à la fin de la première étape (NR_{STOP}).

4. Procédé de soudage selon la revendication 2 ou 3, **caractérisé en ce qu'**à l'issue de ladite phase d'étalonnage (b), on augmente la puissance (LM) transmise par le faisceau laser à ladite région de soudure (33), préférablement de manière sensiblement linéaire en fonction du temps.

5. Procédé de soudage selon l'une quelconque des revendications précédentes, **caractérisé en ce que** ledit paramètre physique (BR) dont la valeur est mesurée présente une évolution, au cours de ladite première étape, liée à l'évolution du niveau de lumière réfléchie par le matériau à souder.

6. Procédé de soudage selon la revendication 5, **caractérisé en ce que** la mesure dudit paramètre physique (BR) est effectuée suivant une direction sensiblement normale à la surface (4) de ladite région de soudure (33).

7. Procédé de soudage selon l'une quelconque des revendications précédentes, **caractérisé en ce que** lesdites caractéristiques du faisceau laser (3, 32) ajustées au cours de l'opération c) de la revendication 1 comprennent sa puissance (LM).

8. Procédé de soudage selon l'une quelconque des revendications 2 à 4, **caractérisé en ce que** la puissance (LM) du faisceau laser (3, 32) est abaissée d'au moins 10% en réponse à l'obtention d'une valeur prédéfinie (NR_{STOP}) de la grandeur définie dans ladite étape de traitement, ladite valeur prédéfinie (NR_{STOP}) correspondant à la fin de ladite première étape.

9. Procédé de soudage selon l'une quelconque des revendications précédentes, **caractérisé en ce que** la valeur d'un paramètre physique supplémentaire, dont l'évolution est liée à l'évolution de la température de ladite région de soudure (33), est également mesurée au cours de l'opération b) et prise en compte pour améliorer l'ajustement des caractéristiques (LM) du faisceau laser (3, 32) dans l'opération c) de la revendication 1.

10. Procédé de soudage selon l'une quelconque des revendications précédentes, **caractérisé en ce que** les opérations a) à c) de la revendication 1 sont effectuées de manière continue tout au long de ladite première étape.

11. Procédé de soudage selon l'une quelconque des revendications précédentes appliqué au soudage de pièces en métal ou en alliage métallique.

12. Procédé de soudage selon la revendication 11, ledit métal et ledit alliage métallique pouvant être respectivement choisis dans les groupes comprenant respectivement le cuivre, l'argent, l'or, l'aluminium et, le cuprobéryllium, le laiton, le bronze.

13. Dispositif de soudage par points à l'aide d'un faisceau laser pour la mise en oeuvre du procédé selon l'une quelconque des revendications 1 à 12, comportant une source (31) commandée par un circuit de commande (30) et capable d'émettre un faisceau laser (3, 32) en direction d'au moins une région de soudure (33) d'un matériau agencés à souder, le dispositif comportant également des moyens de régulation (34 à 37) ordonné pour permettre la réalisation d'un point de soudure en deux étapes successives, une première étape de préparation destinée à modifier l'état de surface dudit matériau à souder dans ladite région de soudure (33) de manière à obtenir des conditions prédéfinies aptes à la mise en oeuvre d'une seconde étape comprenant le soudage en tant que tel au cours de laquelle ledit faisceau laser est maintenu opérationnel au moins partiellement en vue de finaliser le point de soudure, lesdits moyens de régulation (34 à 37) comprenant des moyens de mesure (34, 36) au moins de la valeur d'un paramètre physique (BR) caractéristique de l'état de surface du matériau à souder dans ladite région de soudure (33) produisant un premier signal représentatif de ladite valeur mesurée à destination d'un circuit contrôleur (37), susceptible de suivre l'évolution de la valeur dudit paramètre physique (BR), le circuit contrôleur (37) étant également susceptible de produire un second signal à destination du circuit de commande (30) de la source laser (31), en fonction de l'évolution de la valeur dudit paramètre physique (BR), de manière à ajuster les caractéristiques du faisceau laser (3, 32) émis durant ladite première étape pour obtenir lesdites conditions prédéfinies en vue de réaliser a seconde étape dite de sondage.

14. Dispositif de soudage selon la revendication 13, **caractérisé en ce que** lesdits moyens de régulation (34 à 37) sont en outre destinés à la mise en oeuvre d'une phase d'étalonnage (b) préliminaire pendant laquelle les caractéristiques (LM) du faisceau laser (3, 32) sont sensiblement constantes pour permettre la détermination d'une valeur initiale dudit paramètre physique (BR), ledit circuit contrôleur (37) étant susceptible de prendre en compte ladite valeur initiale pour effectuer un traitement des valeurs dudit paramètre physique (BR) mesurées et définir une grandeur (NR) dont l'évolution est liée à l'évolution de la valeur dudit paramètre physique (BR), ledit second signal produit par le circuit contrôleur (37) à destination du circuit de commande (30) de la source laser (31) étant fonction de la valeur de ladite grandeur (NR).

15. Dispositif selon la revendication 13 ou 14, **caractérisé en ce que** lesdits moyens de régulation comprennent un premier capteur optique (34) pour mesurer la valeur d'un paramètre physique (BR) dont l'évolution est liée à l'évolution du niveau de lumière réfléchie par le matériau à souder.

16. Dispositif selon la revendication 15, **caractérisé en ce que** lesdits moyens de régulation comprennent en outre un second capteur optique (35) pour mesurer la puissance (LM) du faisceau laser (3, 32) émis sur son trajet optique entre la source laser (31) et la région de soudure (33).

17. Dispositif selon l'une quelconque des revendications 13 à 16, **caractérisé en ce que** lesdits moyens de régulation comprennent un capteur de rayonnements infrarouges (36) pour mesurer l'évolution de la température dans ladite région de soudure (33).

18. Dispositif selon la revendication 16 ou 17, **caractérisé en ce qu'**il comporte une tête d'usinage à partir de laquelle le faisceau laser (3, 32) est émis hors du dispositif et dans laquelle l'ensemble desdits capteurs (34 à 36) est arrangé.

19. Dispositif selon l'une quelconque des revendications 13 à 18, **caractérisé en ce qu'**il est connecté à un ordinateur (38) permettant de le commander via une interface adaptée.

## Claims

1. Spot welding process using a laser beam (3, 32) in which the welding of at least one spot comprises at least a first step of preparation of the material to be welded followed by a second step of welding during which said laser beam is maintained at least partly operational in view to finalize the spot weld, said first step being adapted to modify the surface state (4) at least in a weld region (33) of said material to be welded to obtain predefined conditions suited to the implementation of said second step, said first step comprising the following operations:
a) directing a laser beam (3, 32) onto said weld region (33) of the material to be welded,
b) measuring the value of at least one physical parameter (BR) that is characteristic of the surface state (4) of the material to be welded in said weld region (33) to monitor the evolution thereof, and
c) adjusting the characteristics (LM) of the laser beam (3, 32) as a function of the evolution of the value of said physical parameter (BR) determined in operation b),
in order to obtain said predefined conditions before implementing said second step.

2. Welding process according to claim 1, **characterised in that**, during said first step, the operation b) is preceded by a calibration phase (b) during which an initial value of said physical parameter (BR) is determined, the operation b) further comprising a step of processing each value of said measured physical parameter in relation to said initial value in particular, in order to define a parameter (NR) whose evolution during said first step is related to the evolution of the value of said physical parameter (BR), the characteristics (LM) of the laser beam (3, 32) being adjusted during the operation c) as a function of the evolution of said parameter (NR).

3. Welding process according to claim 2, **characterised in that** said predefined conditions comprise the dimension (D1), at the level of the surface (4) of said material to be welded in the weld region (33), of a region (5) of said material brought to a molten state at the end of said first step, said dimension (D1) being a function of the value of said calculated parameter at the end of the first step (NR_{STOP}).

4. Welding process according to claim 2 or 3, **characterised in that**, after said calibration phase (b), the power (LM) emitted by the laser beam onto said weld region (33) is increased, preferably in a substantially linear manner as a function of time.

5. Welding process according to any one of the preceding claims, **characterised in that** said physical parameter (BR) whose value is measured evolves during said first step in a manner that is related to the evolution of the level of light reflected by the material to be welded.

6. Welding process according to claim 5, **characterised in that** said physical parameter (BR) is measured in a direction substantially normal to the surface (4) of said weld region (33).

7. Welding process according to any one of the preceding claims, **characterised in that** said characteristics of the laser beam (3, 32) adjusted during the operation c) of claim 1 comprise its power (LM).

8. Welding process according to any one of claims 2 to 4, **characterised in that** the power (LM) of the laser beam (3, 32) is reduced by at least 10% in response to obtaining a predefined value (NR_{STOP}) of the parameter defined in said processing step, said predefined value (NR_{STOP}) corresponding to the end of said first step.

9. Welding process according to any one of the preceding claims, **characterised in that** the value of an additional physical parameter, the evolution of which is related to the evolution of the temperature of said weld region (33), is also measured during the operation b) and taken into account to improve the setting of the characteristics (LM) of the laser beam (3, 32) in the operation c) of claim 1.

10. Welding process according to any one of the preceding claims, **characterised in that** the operations a) to c) of claim 1 are effected continuously throughout said first step.

11. Welding process according to any one of the preceding claims applied to welding metal or metal alloy parts.

12. Welding process according to claim 11, said metal and said metal alloy being respectively chosen in the groups respectively comprising copper, silver, gold, aluminium and cuproberyllium (CuBe), brass, bronze.

13. Spot welding device employing a laser beam for the process implementation according to any one of claims of claims 1 to 12, comprising a source (31) controlled by a control circuit (30) and capable of emitting a laser beam (3, 32) in the direction of at least one weld region (33) of a material to be welded, the device further comprising control means (34 to 37) arranged to allow the execution of a spot weld in two successive steps, including a first or preparation step adapted to modify the surface state of said material to be welded in said weld region (33) to obtain predefined conditions suited to the implementation of a second step comprising welding as such during which said laser beam is maintained at least partly operational in view to finalize the spot weld, said control means (34 to 37) comprising means (34, 36) for measuring at least the value of a physical parameter (BR) characteristic of the surface state of the material to be welded in said weld region (33) and producing a first signal representative of said measured value sent to a control circuit (37) able to monitor the evolution of the value of said physical parameter (BR), the control circuit (37) being also adapted to produce a second signal that is a function of the evolution of the value of said physical parameter (BR) and is sent to the control circuit (30) of the laser source (31) in order to adjust the characteristics of the laser beam (3, 32) emitted during said first step to obtain said predefined conditions in view to execute the second step of welding.

14. Welding device according to claim 13, **characterised in that** said regulation means (34 to 37) are further adapted to execute a preliminary calibration phase (b) during which the characteristics (LM) of the laser beam (3, 32) are substantially constant to enable the determination of an initial value of said physical parameter (BR), said control circuit (37) being adapted to take account of said initial value in order to process measured values of said physical parameter (BR) and to define a parameter (NR) whose evolution is related to the evolution of the value of said physical parameter (BR), said second signal produced by the control circuit (37) and sent to the control circuit (30) of the laser source (31) being a function of the value of said parameter (NR).

15. Device according to claim 13 or 14, **characterised in that** said regulation means comprise a first optical sensor (34) for measuring the value of a physical parameter (BR) whose evolution is related to the evolution of the level of light reflected by the material to be welded.

16. Device according to claim 15, **characterised in that** said regulation means further comprise a second optical sensor (35) for measuring the power (LM) of the laser beam (3, 32) emitted on the optical path thereof between the laser source (31) and the weld region (33).

17. Device according to any one of claims 13 to 16, **characterised in that** said regulation means comprise an infrared radiation sensor (36) for measuring the evolution of the temperature in said weld region (33).

18. Device according to claim 16 or claim 17, **characterised in that** said device comprises a machining head from which said laser beam (3, 32) is emitted out of the device and in which all of said sensors (34 to 36) are arranged.

19. Device according to any one of claims 13 to 18, **characterised in that** said device is connected to a computer (38) for controlling it via a suitable interface.

## Patentansprüche

1. Verfahren zum Punktschweißen mit einem Laserstrahlenbündel (3, 32), bei dem das Schweißen wenigstens eines Punkts wenigstens einen ersten Schritt des Vorbereitens eines zu verschweißenden Materials, gefolgt von einem zweiten Schritt des Schweißens, in dessen Verlauf das Laserstrahlenbündel wenigstens partiell funktionsfähig gehalten wird, um den Schweißpunkt fertig zu stellen, umfasst, wobei der erste Schritt dazu vorgesehen ist, den Oberflächenzustand (4) wenigstens in einem Schweißbereich (33) des zu verschweißenden Materials zu modifizieren, um im Voraus definierte Bedingungen zu erhalten, die für die Ausführung des zweiten Schrittes geeignet sind, wobei der erste Schritt die Operationen umfasst, die darin bestehen:
a) ein Laserstrahlenbündel (3, 32) auf den Schweißbereich (33) des zu verschweißenden Materials zu richten,
b) Messungen des Wertes wenigstens eines physikalischen Parameters (BR) vorzunehmen, der für den Zustand der Oberfläche (4) des zu verschweißenden Materials in dem Schweißbereich (33) charakteristisch ist, um die Entwicklung zu verfolgen, und
c) die Charakteristiken (LM) des Laserstrahlenbündels (3, 32) in Abhängigkeit von der im Verlauf der Operation b) bestimmten Entwicklung des Wertes des physikalischen Parameters (BR) einzustellen,
um die im Voraus definierten Bedingungen zu erhalten, bevor der zweite Schritt ausgeführt wird.

2. Schweißverfahren nach Anspruch 1, **dadurch gekennzeichnet, dass** in dem ersten Schritt der Operation b) eine Kalibrierungsphase (b) vorhergeht, in deren Verlauf ein Anfangswert des physikalischen Parameters (BR) bestimmt wird, wobei die Operation b) außerdem einen Schritt des Verarbeitens jedes Wertes des gemessenen physikalischen Parameters insbesondere in Bezug auf den Anfangswert umfasst, um eine Größe (NR) zu definieren, deren Entwicklung im Verlauf des ersten Schrittes mit der Entwicklung des Wertes des physikalischen Parameters (BR) in Beziehung steht, wobei das Einstellen der Charakteristiken (LM) des Laserstrahlenbündels (3, 32) in der Operation c) in Abhängigkeit von der Entwicklung der Größe (NR) ausgeführt wird.

3. Schweißverfahren nach Anspruch 2, **dadurch gekennzeichnet, dass** die im Voraus definierten Bedingungen die Abmessungen (D1) in der Oberfläche (4) des zu verschweißenden Materials in dem Schweißbereich (33) einer Zone (5) des Materials, die am Ende des ersten Schrittes in einen geschmolzenen Zustand überführt worden ist, umfassen, wobei die Abmessungen (D1) von dem am Ende des ersten Schrittes (NR_{STOP}) berechneten Wert der Größe abhängen.

4. Schweißverfahren nach Anspruch 2 oder 3, **dadurch gekennzeichnet, dass** am Ende der Kalibrierungsphase (b) die Leistung (LM), die vom Laserstrahlenbündel an den Schweißbereich (33) übertragen wird, erhöht wird, vorzugsweise im Wesentlichen linear in Abhängigkeit von der Zeit.

5. Schweißverfahren nach einem der vorhergehenden Ansprüche, **dadurch gekennzeichnet, dass** der physikalische Parameter (BR), dessen Wert gemessen wird, eine Entwicklung während des ersten Schrittes zeigt, die mit der Entwicklung des Lichtpegels, der von dem zu verschweißenden Material reflektiert wird, in Beziehung steht.

6. Schweißverfahren nach Anspruch 5, **dadurch gekennzeichnet, dass** die Messung des physikalischen Parameters (BR) in einer Richtung erfolgt, die zu der Oberfläche (4) des Schweißbereichs (33) im Wesentlichen senkrecht ist.

7. Schweißverfahren nach einem der vorhergehenden Ansprüche, **dadurch gekennzeichnet, dass** die Charakteristiken des Laserstrahlenbündels (3, 32), die im Verlauf der Operation c) von Anspruch 1 eingestellt werden, seine Leistung (LM) enthalten.

8. Schweißverfahren nach einem der Ansprüche 2 bis 4, **dadurch gekennzeichnet, dass** die Leistung (LM) des Laserstrahlenbündels (3, 32) in Reaktion darauf, dass ein im Voraus definierter Wert (NR_{STOP}) der im Verarbeitungsschritt definierten Größe erhalten wird, um wenigstens 10 % gesenkt wird, wobei der im Voraus definierte Wert (NR_{STOP}) dem Ende des ersten Schrittes entspricht.

9. Schweißverfahren nach einem der vorhergehenden Ansprüche, **dadurch gekennzeichnet, dass** der Wert eines zusätzlichen physikalischen Parameters, dessen Entwicklung mit der Entwicklung der Temperatur des Schweißbereichs (33) in Beziehung steht, im Verlauf der Operation b) ebenfalls gemessen und berücksichtigt wird, um die Einstellung der Charakteristiken (LM) des Laserstrahlenbündels (3, 32) in der Operation c) von Anspruch 1 zu verbessern.

10. Schweißverfahren nach einem der vorhergehenden Ansprüche, **dadurch gekennzeichnet, dass** die Operationen a) bis c) von Anspruch 1 ununterbrochen während des gesamten ersten Schrittes ausgeführt werden.

11. Schweißverfahren nach einem der vorhergehenden Ansprüche, das auf das Schweißen von Teilen aus Metall oder aus einer Metalllegierung angewendet wird.

12. Schweißverfahren nach Anspruch 11, wobei das Metall und die Metalllegierung jeweils aus den Gruppen gewählt sein können, die Kupfer, Silber, Gold, Aluminium bzw. Kupferberyllium, Messing und Bronze umfassen.

13. Vorrichtung zum Punktschweißen mit Hilfe eines Laserstrahlenbündels für die Ausführung des Verfahrens nach einem der Ansprüche 1 bis 12, die eine Quelle (31), die durch eine Steuerschaltung (30) gesteuert wird und ein Laserstrahlenbündel (3, 32) in Richtung zu wenigstens einem Schweißbereich (33) eines zu verschweißenden Materials aussenden kann, umfasst, wobei die Vorrichtung außerdem Regulierungsmittel (34 bis 37) umfasst, die so beschaffen sind, dass sie die Verwirklichung eines Schweißpunkts in zwei aufeinander folgenden Schritten ermöglichen, wobei ein erster Vorbereitungsschritt dazu bestimmt ist, den Oberflächenzustand des zu verschweißenden Materials in dem Schweißbereich (33) in der Weise zu modifizieren, dass im Voraus definierte Bedingungen erhalten werden, die für die Ausführung eines zweiten Schrittes geeignet sind, der das Schweißen als solches umfasst, in dessen Verlauf das Laserstrahlenbündel wenigstens partiell funktionsfähig gehalten wird, um den Schweißpunkt fertig zu stellen, wobei die Regulierungsmittel (34 bis 37) Mittel (34, 36) zum Messen wenigstens des Wertes eines physikalischen Parameters (BR) umfassen, der für den Oberflächenzustand des zu verschweißenden Materials im Schweißbereich (33) charakteristisch ist, die ein erstes Signal, das den gemessenen Wert repräsentiert, für eine Kontrollschaltung (37) erzeugen können, die der Entwicklung des Wertes des physikalischen Parameters (BR) folgen kann, wobei die Kontrollschaltung (37) außerdem ein zweites Signal für die Steuerschaltung (30) der Laserquelle (31) in Abhängigkeit von der Entwicklung des Wertes des physikalischen Parameters (BR) erzeugen kann, derart, dass die Charakteristiken des während des ersten Schrittes ausgesendeten Laserstrahlenbündels (3, 32) eingestellt werden, um die im Voraus definierten Bedingungen zu erhalten, um den zweiten so genannten Schweißschritt auszuführen.

14. Schweißvorrichtung nach Anspruch 13, **dadurch gekennzeichnet, dass** die Regulierungsmittel (34 bis 37) außerdem dazu vorgesehen sind, eine vorhergehende Kalibrierungsphase (b) auszuführen, in der die Charakteristiken (LM) des Laserstrahlenbündels (3, 32) im Wesentlichen konstant sind, um die Bestimmung eines Anfangswertes des physikalischen Parameters (BR) zu ermöglichen, wobei die Kontrollschaltung (37) den Anfangswert berücksichtigen kann, um eine Verarbeitung der gemessenen Werte des physikalischen Parameters (BR) auszuführen und eine Größe (NR) zu definieren, deren Entwicklung mit der Entwicklung des Wertes des physikalischen Parameters (BR) in Beziehung steht, wobei das von der Kontrollschaltung (37) für die Steuerschaltung (30) der Laserquelle (31) erzeugte zweite Signal von dem Wert der Größe (NR) abhängt.

15. Vorrichtung nach Anspruch 13 oder 14, **dadurch gekennzeichnet, dass** die Regulierungsmittel einen ersten optischen Sensor (34) zum Messen des Wertes eines physikalischen Parameters (BR), dessen Entwicklung mit der Entwicklung des Lichtpegels, der von dem zu verschweißenden Material reflektiert wird, in Beziehung steht, umfassen.

16. Vorrichtung nach Anspruch 15, **dadurch gekennzeichnet, dass** die Regulierungsmittel außerdem einen zweiten optischen Sensor (35) zum Messen der Leistung (LM) des Laserstrahlenbündels (3, 32), das auf einem optischen Weg zwischen der Laserquelle (31) und dem Schweißbereich (33) ausgesendet wird, umfassen.

17. Vorrichtung nach einem der Ansprüche 13 bis 16, **dadurch gekennzeichnet, dass** die Regulierungsmittel einen Infrarotstrahlungssensor (36) umfassen, um die Entwicklung der Temperatur in dem Schweißbereich (33) zu messen.

18. Vorrichtung nach Anspruch 16 oder 17, **dadurch gekennzeichnet, dass** sie einen Bearbeitungskopf aufweist, von dem das Laserstrahlenbündel (3, 32) von der Vorrichtung ausgesendet wird und in dem die Gesamtheit der Sensoren (34 bis 36) angeordnet ist.

19. Vorrichtung nach einem der Ansprüche 13 bis 18, **dadurch gekennzeichnet, dass** sie mit einem Rechner (38) verbunden ist, der sie über eine geeignete Schnittstelle steuern kann.
